# EUROPÄISCHE PATENTANMELDUNG

(11) **EP 1 662 293 A1**
(43) Veröffentlichungstag der Anmeldung: **31.05.2006**
(21) Anmeldenummer: 05021286.9
(22) Anmeldetag: 29.09.2005
(51) Int. Cl.: G02C 5/14, G02C 11/00, B65D 33/00

(54) **Schutzelement zum Schutz eines Brillenbügels**

(30) Priorität: 26.11.2004 DE 202004018416 U
(71) Anmelder: EFALOCK Professional Tools GmbH, 97688 Bad Kissingen (DE)
(72) Erfinder: Schembach, Alfred, D-97702 Münnerstadt (DE)
(74) Vertreter: von den Steinen, Axel

(57) **Zusammenfassung**

Die Erfindung betrifft ein Schutzelement (01) zum Schutz eines Brillenbügels (02) vor chemischen Stoffen, die während einer Kopfbehandlung, insbesondere während einer Haarbehandlung, im Bereich des Brillenbügels (02) zum Einsatz kommen. Das Schutzelement (01) umfasst eine längliche Ummantelung, die an zumindest einem Ende (04) offen ist, so dass die Ummantelung vom offenen Ende (04) her auf den Brillenbügel (02) aufgeschoben werden kann. Die Ummantelung wird dabei von einem nahtfreien Schlauchelement (03) gebildet.

## Beschreibung

Die Erfindung betrifft ein Schutzelement zum Schutz eines Brillenbügels vor chemischen Stoffen nach dem Oberbegriff des Anspruchs 1.

Derartige Schutzelemente werden beispielsweise, jedoch keineswegs ausschließlich, im Frisörhandwerk benötigt, um die Brillenbügel von Kunden während einer Haarbehandlung, beispielsweise beim Färben von Haaren, vor unerwünschten Einflüssen durch chemische Stoffe zu schützen. Gattungsgemäße Schutzelemente umfassen dazu eine längliche Ummantelung, die an zumindest einem Ende offen ist. Zum Schutz des Brillenbügels wird die Ummantelung auf den Brillenbügel aufgeschoben, so dass der Brillenbügel vor unmittelbarem Kontakt mit den bei der Behandlung verwendeten chemischen Stoffen geschützt ist.

Ein solches Schutzelement ist beispielsweise aus der EP 0 305 281 B1 bekannt. Zur Herstellung dieses Schutzelements werden zwei Kunststoffblätter aufeinandergelegt und längs der Längsseiten miteinander verschweißt, so dass durch das Verschweißen der Kunststoffblätter miteinander die erwünschte Ummantelung gebildet wird. Nachteilig an diesen Schutzelementen ist es, dass es im Bereich der Schweißnähte zu unerwünschten Ausnehmungen in der Ummantelung kommen kann. Wird nämlich mit zu hoher Schweißenergie geschweißt, so schmilzt der Kunststoff unter Bildung teilweise sehr kleiner Löcher, die zunächst unbemerkt bleiben. Durch diese Löcher in der Ummantelung kann dann der chemische Stoff ins Innere der Ummantelung gelangen und dort Beschädigungen an den Brillenbügeln verursachen. Wird andererseits mit zu geringer Schweißenergie geschweißt, so kann es vorkommen, dass die Verbindung zwischen den Kunststoffblättern zu schwach ist, da das Kunststoffmaterial lediglich oberflächig miteinander verklebt. Entlang dieser Schwachstellen in der Schweißnaht können sich dann Löcher in der Ummantelung bilden, durch die wiederum der chemische Stoff ins Innere der Ummantelung gelangt und Beschädigungen am Brillenbügel verursacht.

Ausgehend von diesem Stand der Technik ist es deshalb Aufgabe der vorliegenden Erfindung, ein neues Schutzelement vorzuschlagen, das einen zuverlässigen Schutz der Brillenbügel gewährleistet.

Diese Aufgabe wird durch ein Schutzelement nach der Lehre des Anspruchs 1 gelöst.

Vorteilhafte Ausführungsformen der Erfindung sind Gegenstand der Unteransprüche.

Das erfindungsgemäße Schutzelement beruht auf dem Grundgedanken, dass die Ummantelung von einem nahtfreien Schlauchelement gebildet wird. Aufgrund der Nahtfreiheit ist die Bildung von unerwünschten Löchern in der Ummantelung zuverlässig ausgeschlossen und der Schutz der Brillenbügel vor den chemischen Stoffen jederzeit gewährleistet.

Durch welches Herstellungsverfahren das Schlauchelement nahtfrei hergestellt wird, ist grundsätzlich beliebig. Besonders einfach und kostengünstig lässt sich das Schlauchelement durch Extrusion, insbesondere Blasextrusion, eines Kunststoffs herstellen. Bei der Blasextrusion wird das Kunststoffmaterial durch eine Blasdüse extrudiert, wobei sich ein nahtfreier Kunststoffschlauch bildet. Der Durchmesser dieses Kunststoffschlauchs ist dabei so abzustimmen, dass die durch Ablängen des Kunststoffschlauchs hergestellten Schlauchelemente einerseits ein Aufschieben auf die Brillenbügel erlauben und andererseits ein zuverlässiger Sitz auf den Brillenbügeln gewährleistet ist.

Als Material zur Bildung der Schlauchelemente sind insbesondere Kunststofffolien, insbesondere Polyethylenfolien, geeignet. Dieses Material kann insbesondere auch durch Blasextrusion schlauchförmig und ohne Nähte hergestellt werden.

Grundsätzlich ist es denkbar, dass beide Enden des Schlauchelements offen sind. Bei derartigen Ausführungsformen muss jedoch darauf geachtet werden, dass das Schlauchelement signifikant länger als der Brillenbügel ist, um ein Überstehen des freien Endes des Brillenbügels über das zweite offene Ende des Schutzelements zu vermeiden. Dieses Problem lässt sich dadurch umgehen, dass ein Ende des Schlauchelements verschlossen wird. Die Länge des Schlauchelements kann dann im Wesentlichen der Länge eines durchschnittlichen Brillenbügels entsprechen, so dass sich eine erhebliche Materialeinsparung ergibt. Zur Herstellung des Verschlusses an einem Ende des Schlauchelements kann das Schlauchelement beispielsweise an diesem Ende unter Bildung einer Schweißnaht abgeschweißt werden.

Gattungsgemäße Schutzelemente werden regelmäßig nicht einzeln verkauft, sondern gelangen in Vorratspackungen in den Handel, so dass der Benutzer bei Bedarf immer eine geeignete Anzahl von Schutzelementen aus der Vorratspackung entnehmen kann. Die EP 0 305 281 B1 schlägt als Vorratspackung ein Halterungsblatt vor, auf dem mehrere Schutzelemente aufgeklebt sind. Bei Bedarf kann der Benutzer eine entsprechende Anzahl von Schutzelementen vom Halterungsblatt abziehen. Die Herstellung einer solchen Vorratspackung ist aufwendig und verursacht daher erhebliche Kosten. Außerdem kann nur eine sehr beschränkte Anzahl von Schutzelementen auf einem Halterungsblatt angeordnet werden. Es wird deshalb vorgeschlagen, dass zur Bildung einer Vorratspackung mehrere Schlauchelemente unter Bildung einer Vorratsbahn an ihren Enden miteinander verbunden sind. Eine solche Vorratsbahn lässt sich dann einfach zu einer Vorratsrolle aufwickeln. Außerdem kann eine solche Vorratsbahn mit einer Vielzahl von Schlauchelementen sehr einfach und kostengünstig durch Blasextrusion hergestellt werden.

Um die Schlauchelemente von der Vorratsbahn zu trennen, ist es denkbar, dass der Benutzer ein geeignetes Werkzeug, beispielsweise eine Schere, benutzt und unter Einsatz dieses Werkzeugs eine bestimmte Länge der Vorratsbahn ablängt. Um die Notwendigkeit der Verwendung eines Werkzeugs zu vermeiden, kann im Verbindungsbereich zwischen zwei aufeinander folgenden Schlauchelementen eine Trenneinrichtung in der Vorratsbahn vorgesehen sein, an der die Schlauchelemente von Hand getrennt werden können. Durch die vorgefertigte Trenneinrichtung wird außerdem gewährleistet, dass die Schlauchelemente jeweils eine einheitliche Länge aufweisen.

Um ein saubereres Trennen der Vorratsbahn zwischen zwei aufeinander folgenden Schlauchelementen zu ermöglichen, ist es besonders vorteilhaft, wenn die Trenneinrichtung von einer Perforation gebildet wird. Eine solche Perforation kann beispielsweise dadurch hergestellt werden, dass die Vorratsbahn nach dem Schlauchblasen über eine geeignete Perforationswalze geführt wird, so dass in regelmäßigen Abständen eine Perforation in der Vorratsbahn eingebracht wird.

Weiterhin ist es besonders vorteilhaft, wenn benachbart zur Trenneinrichtung ein Verschlusselement vorgesehen ist, mit dem das Ende eines Schlauchelements verschlossen wird. Durch Abtrennen der Vorratsbahn entlang der Perforation wird auf diese Weise jeweils ein neues Schlauchelement mit geschlossenem Ende gebildet.

Das Verschlusselement kann beispielsweise von einer geprägten Schweißnaht gebildet werden. Dazu kann die Vorratsbahn beispielsweise über eine geeignete Schweißwalze geführt werden, die in regelmäßigen Abständen geprägte Schweißnähte an der Vorratsbahn anbringt.

Um die Vorratsbahn einfach auf eine Vorratsrolle aufspulen zu können, sollte sie entlang der Längserstreckung der Vorratsbahn an zwei dadurch gebildeten Längskanten flächig zusammengefaltet sein. Diese flächige und dabei zweilagige Vorratsbahn kann dann einfach und ohne Bildung weiterer Querfallen sehr dicht aufgespult werden.

Das Aufspulen der Vorratsbahn wird erheblich dadurch vereinfacht, dass in der Mitte der Vorratsrolle ein Kernelement vorgesehen ist, beispielsweise eine Papierhülse.

Um die Vorratsrolle in einfacher Weise handhaben zu können und eine vorzeitige Verschmutzung der auf die Vorratsrolle aufgespulten Schutzelemente zu vermeiden, sollte die Vorratsrolle in einem Vorratsbehälter angeordnet sein. Der Vorratsbehälter weist dabei eine Ausnehmung, beispielsweise einen Schlitz, auf, durch die die Vorratsbahn aus dem Inneren des Vorratsbehälters herausgezogen werden kann.

Aufbau und Konstruktion des Vorratsbehälters sind grundsätzlich beliebig. Besonders geeignet sind jedoch Pappschachteln, da diese einfach und kostengünstig hergestellt werden können. Insbesondere Einwegverpackungen sind bei Verwendung solcher Papierschachteln denkbar.

Eine Ausführungsform der Erfindung ist in den Zeichnungen schematisch dargestellt und wird nachfolgend beispielhaft erläutert.

Es zeigen:
- **Fig. 1**: ein Schutzelement in seitlicher perspektivischer Ansicht;
- **Fig. 2**: das Schutzelement gemäß **Fig. 1** bei Anordnung an einem Brillenbügel in seitlicher perspektivischer Ansicht;
- **Fig. 3**: eine Vorratsrolle mit einer Vielzahl darauf aufgespulter Schutzelemente gemäß **Fig. 1** in seitlicher perspektivischer Ansicht;
- **Fig. 4**: einen Vorratsbehälter zur Aufnahme der Vorratsrolle gemäß **Fig. 3** in seitlicher perspektivischer Ansicht.

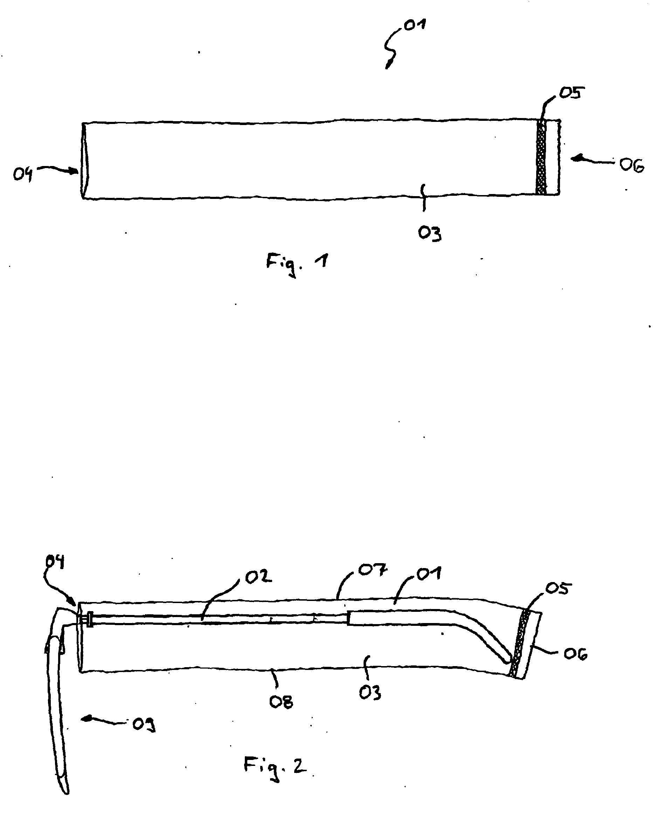

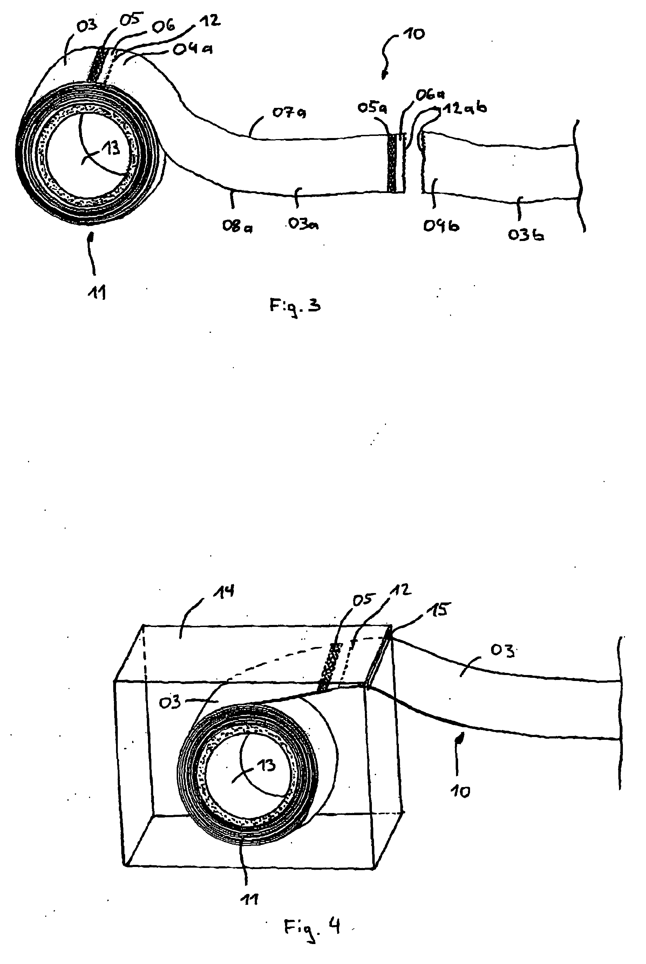

In **Fig. 1** ist ein Schutzelement 01 in seitlicher perspektivischer Ansicht dargestellt. Das Schutzelement 01 dient dem Schutz von Brillenbügeln 02 (siehe **Fig. 2)** vor chemischen Stoffen, wie sie beispielsweise während des Haarfärbens beim Frisör Verwendung finden. Das Schutzelement 01 wird von einem nahtfreien Schlauchelement 03 gebildet, das durch Blasextrusion und anschließende Nachbearbeitung hergestellt worden ist. Das Schlauchelement 01 weist ein offenes Ende 04 und ein mit einem Verschlusselement 05 verschlossenes Ende 06 auf. Das Verschlusselement 05 wird von einer Schweißnaht gebildet, mit der die Innenseite des aus Kunststofffolie bestehenden Schlauchelements 03 quer zu den Längskanten 07 und 08 stoffschlüssig miteinander verschweißt wird.

Wie aus **Fig. 2** ersichtlich, wird das Schlauchelement 03 mit seinem offenen Ende 04 auf den Brillenbügel 02 einer Brille 09 aufgeschoben, um auf diese Weise den gesamten Brillenbügel 02 nach außen hin abzudecken und so vor chemischen Stoffen zu schützen. Der Durchmesser des nahtfreien Schlauchelements 03 ist dabei so gewählt, dass der Brillenbügel 02 trotz des abgewinkelten Endes leicht in das Schlauchelement 03 eingeschoben werden kann. Aufgrund der elastischen Verformbarkeit des Materials zur Herstellung des Schlauchelements 03, beispielsweise einer Polyethylenfolie, kann sich das Schlauchelement 03 dabei auch in Falten legen und der Form von gebogenen Brillenbügeln leicht angepasst werden.

**Fig. 3** zeigt eine Vorratsbahn 10, die von einer Vielzahl von an ihren Enden 04 und 06 jeweils miteinander verbundenen Schlauchelementen 03 gebildet ist. Die Vorratsbahn 10 ist zur Erleichterung der Handhabung auf eine Vorratsrolle 11 aufgespult. Um das Aufspulen der Vorratsbahn 10 auf die Vorratsrolle 11 zu ermöglichen, werden die Schlauchelemente 03 entlang der dadurch gebildeten Längskanten 07 und 08 flächig zusammengefaltet.

Zwischen zwei jeweils aufeinander folgenden Schlauchelementen 03 ist jeweils eine in der Art einer Perforation ausgebildete Trenneinrichtung 12 vorgesehen, die das Abtrennen des jeweils vordersten Schlauchelements 03 von der Vorratsbahn 10 ohne Einsatz von Werkzeugen ermöglicht. In Fig. 3 ist dies beispielhaft anhand der Schlauchelemente 03a und 03b dargestellt. Um das Schlauchelement 03b von der Vorratsbahn 10 zu lösen, wird die Perforation 12ab zwischen den Schlauchelementen 03a und 03b durchgetrennt, so dass sich am Schlauchelement 03b das offene Ende 04b bildet.

Zur Herstellung der Vorratsrolle 11 wird zunächst ein Kunststoffmaterial, vorzugsweise transparentes Polyethylen, blasextrudiert, so dass ein durchgehender und nahtfreier Blasschlauch aus Kunststofffolie entsteht. Dieser Blasschlauch wird dann über Bearbeitungswalzen geführt, mit denen die Verschlusselemente 05 mit geeigneten Schweißwerkzeugen und die Trenneinrichtungen 12 mit geeigneten Perforationswerkzeugen angebracht werden. Anschließend wird die damit entstandene Vorratsbahn 10 auf ein Kernelement 13 aufgespult. Um die Vorratsrolle 11 vor einem unerwünschten Abrollen und Verschmutzungen zu schützen, wird diese, wie in Fig. 4 dargestellt, in einem Vorratsbehälter 14 angeordnet.

Der Vorratsbehälter ist vorzugsweise aus Papier oder Pappe hergestellt und in Fig. 4 nur zur besseren Erkennbarkeit der Vorratsrolle 11 im Schnitt dargestellt. Der Vorratsbehälter 14 weist eine schlitzförmige Ausnehmung 15 auf, durch die die Vorratsbahn 10 mit den Schlauchelementen 03 aus dem Vorratsbehälter 10 herausgezogen werden kann, um die Schlauchelemente 03 durch Auftrennen der Trenneinrichtungen 12 einzeln zur Verfügung zu stellen. Da das Kernelement 13 und der Vorratsbehälter 14 jeweils aus Papier bzw. Pappe bestehen, kann die gesamte Verpackung nach vollständigem Verbrauch aller Schlauchelemente 03 einfach mit dem Papiermüll entsorgt werden.

## Patentansprüche

1. Schutzelement (01) zum Schutz eines Brillenbügels (02) vor chemischen Stoffen, die während einer Kopfbehandlung, insbesondere während einer Haarbehandlung, im Bereich des Brillenbügels (02) zum Einsatz kommen, wobei das Schutzelement (01) eine längliche Ummantelung umfasst, die an zumindest einem Ende (04) offen ist, so dass die Ummantelung vom offenen Ende (04) her auf den Brillenbügel (02) aufgeschoben werden kann,
**dadurch gekennzeichnet,**
**dass** die Ummantelung von einem nahtfreien Schlauchelement (03) gebildet wird.

2. Schutzelement nach Anspruch 1,
**dadurch gekennzeichnet ,**
**dass** das Schlauchelement (03) durch Extrusion, insbesondere Blasextrusion, eines Kunststoffes hergestellt ist.

3. Schutzelement nach Anspruch 1 oder 2,
**dadurch gekennzeichnet,**
**dass** das Schlauchelement (03) von einer dünnen Kunststofffolie, insbesondere Polyethylenfolie, gebildet wird.

4. Schutzelement nach einem der Ansprüche 1 bis 3,
**dadurch gekennzeichnet,**
**dass** ein Ende (06) des Schlauchelements (03) verschlossen ist.

5. Schutzelement nach einem der Ansprüche 1 bis 4,
**dadurch gekennzeichnet,**
**dass** mehrere Schlauchelemente (03) unter Bildung einer Vorratsbahn (10) an ihren Enden (04, 06) miteinander verbunden sind.

6. Schutzelement nach Anspruch 5,
**dadurch gekennzeichnet,**
**dass** im Verbindungsbereich zwischen zwei aufeinanderfolgenden Schlauchelementen (03a, 03b) jeweils eine Trenneinrichtung (12) in der Vorratsbahn (10) vorgesehen ist, an der die Schlauchelemente (03a, 03b) voneinander getrennt werden können.

7. Schutzelement nach Anspruch 6,
**dadurch gekennzeichnet,**
**dass** die Trenneinrichtung (12) von einer Perforation gebildet wird.

8. Schutzelement nach Anspruch 6 oder 7,
**dadurch gekennzeichnet,**
**dass** benachbart zur Trenneinrichtung (12) ein Verschlusselement (05) vorgesehen ist, mit dem das eine Ende (06) eines Schlauchelements (03) in der Vorratsbahn (10) verschlossen wird.

9. Schutzelement nach Anspruch 8,
**dadurch gekennzeichnet,**
**dass** das Verschlusselement (05) von einer insbesondere geprägten Schweißnaht gebildet wird.

10. Schutzelement nach einem der Ansprüche 5 bis 9,
**dadurch gekennzeichnet,**
**dass** die Vorratsbahn (10) entlang zweier sich längs der Vorratsbahn erstreckender Längskanten flächig zusammengefaltet ist.

11. Schutzelement nach einem der Ansprüche 5 bis 10,
**dadurch gekennzeichnet,**
**dass** die insbesondere flächig zusammengefaltete Vorratsbahn (10) zu einer Vorratsrolle (11) aufgespult ist.

12. Schutzelement nach Anspruch 11,
**dadurch gekennzeichnet ,**
**dass** die Vorratsbahn (10) unter Bildung der Vorratsrolle (11) auf ein Kernelement (13) aufgespult ist.

13. Schutzelement nach Anspruch 12,
**dadurch gekennzeichnet,**
**dass** das Kernelement (13) von einer Papierhülse gebildet wird.

14. Schutzelement nach einem der Ansprüche 11 bis 13,
**dadurch gekennzeichnet,**
**dass** die Vorratsrolle (11) in einem Vorratsbehälter (14) angeordnet ist, wobei der Vorratsbehälter (14) eine Ausnehmung (14) aufweist, durch die die Vorratsbahn (10) aus dem Inneren des Vorratsbehälters herausgezogen werden kann

15. Schutzelement nach Anspruch 14,
**dadurch gekennzeichnet ,**
**dass** der Vorratsbehälter (15) in der Art einer Papierschachtel ausgebildet ist.
